# EUROPEAN PATENT APPLICATION

(11) **EP 4 636 391 A1**
(43) Date of publication of application: **22.10.2025**
(21) Application number: 24170609.2
(22) Date of filing: 16.04.2024
(51) Int. Cl.: G01N 21/65, G01J 3/44

(54) **IMAGING SYSTEM AND METHOD FOR IMAGING**

(71) Applicant: Deutsches Krebsforschungszentrum Stiftung des öffentlichen Rechts, 69120 Heidelberg (DE); Helmholtz Zentrum München - Deutsches Forschungszentrum für Gesundheit und Umwelt (GmbH), 85764 Neuherberg (DE); The Board of Trustees of the Leland Stanford Junior University, Stanford, CA 94305-2038 (US)
(72) Inventor: Arús, Bernardo, 69120 Heidelberg (DE); Chmyrov, Andriy, 69120 Heidelberg (DE); Bruns, Oliver, 69120 Heidelberg (DE); Valdez, Tulio, Stanford, 94305 (US); Yiu, Joycelyn, 85764 Neuherberg (DE); Lingg, Jakob, 85764 Neuherberg (DE)
(74) Representative: Hoffmann Eitle

(57) **Abstract**

Provided is an imaging system for imaging an object, the imaging system comprising: an illumination light source configured to illuminate an area of the object; and a detector configured to detect an image based on Raman scattered light from the object, wherein light emitted by the illumination light source has a wavelength of at least 810nm. Further provided is a method for imaging an object, the method comprising the steps of illuminating an area of the object using illumination light; and detecting an image based on Raman scattered light from the object, wherein the illumination light has a wavelength of at least 810nm.

## Description

### Technical field

The present disclosure relates to an imaging system and a method for imaging, in particular to imaging using Raman scattered light.

### Background

For many applications, the identification of molecules and/or biological tissue compositions play an important role. One common approach is based on labeling and/or staining (in the following, labeling and staining will be generally referred to as "labeling" without any loss of generality) the object to be analyzed and rely on the label for the identification.

One common example is the use of fluorophores, in which the resulting fluorescence is used to analyze the object. While this approach has clear advantages, the requirement of labeling the object comes with substantial disadvantages. For example, labeling the object may not always be possible, may alter the object under study and/or may damage the object. Similarly, also the process of fluorescence imaging itself may damage the object. Thus, the possible range of applications of this approach is limited.

One mechanism that can be exploited without the need for labeling is Raman scattering. Raman scattering-based techniques are based entirely on the endogenous chemical contrast without the need for labelling techniques (Freudiger et al., Science 322(5909): 1857-1861, 2008). This method is based on detecting light from Raman scattering, an inelastic scattering process in which energy is exchanged between incident photons and the scattering object, often times the chemical bonds in tissues: because each chemical bond exchanges energy with light in a specific matter, the spectrum of the incident light shifts in a predictable manner based on the chemical bonds involved (Hu, Shi and Min, Nat Methods 16(9): 830-842, 2019). For instance, a typical biomolecule exhibits four broad Raman bands: the "fingerprint" region between 400 and 1800 cm⁻¹, where many chemical bonds are identified by their very narrow vibrational peaks; the "Raman-silent" region between 1800 and 2800 cm⁻¹, where vibrational transitions of biomolecules are rare; the "CH₂-CH₃" region, also referred to "CH" region, between 2800 and 3100 cm⁻¹, where stretching of CH₂ and CH₃ groups in lipids and proteins can be identified; and the "OH" region between 3200 and 3600 cm⁻¹, where hydroxyl-containing molecules including water and sugars can be detected (Movasaghi et al., Applied Spectroscopy Reviews 42(5): 493-541, 2007). Instead of "region", also the term "band" is commonly used. If reference is made to detection of light within such a region, the term "channel" is used as well.

Conventionally, Raman-based techniques are however only used for spectroscopy or microscopy. These methods take advantage of this phenomenon to visualize and analyze biomolecules in cells and thin tissue sections (Zhang et al., Acc Chem Res 47(8): 2282-2290, 2014). The limitation to small sample areas limits applications, in particular in vivo applications (Bohndiek et al., Proc Natl Acad Sci USA 110(30): 12408-12413, 2013). Specifically, scanning microscopy based on Raman scattering requires high laser fluxes, thus for all practical purposes limiting this technique to analyzing the laser focal point, which is on the order of millimeters (Krafft et al., Chem Soc Rev 45 (7): 1819-1849, 2016). Further, spectroscopic detection of spontaneous Raman scattering involves illumination at a single point or at best along a line and while extending this to areas is in principle possible by scanning the sample, such a process requires minutes in order to scan an area of only 1 cm². Consequently, at present Raman scattering-based techniques are limited to the microscopic scale without any practical applications on the mesoscopic or macroscopic scale.

One reason for this limitation lies in the cross section of Raman scattering oftentimes being smaller than other processes taking place in parallel. These other processes include, but are not limited to, fluorescence, luminescence and autofluorescence processes and are herein generally referred to as "autofluorescence" or "background signals". These background signals make high laser fluxes necessary to achieve a regime in which Raman scattering becomes sufficiently strong to provide a clear and distinguishable signal, i.e., a sufficient signal to noise ratio is needed for detection.

As evidently macroscopic label-free imaging would be highly desirable for elucidating complex processes in healthy or diseased tissues and animal models (Jermyn et al., Sci Transl Med 7(274): 274ra19, 2015), it was suggested to achieve larger fields of view within reasonable exposure times to image Raman scattering with wide-field systems, which provide scalable fields of view based on their optical design (Mallia et al., J Biomed Opt 17(7): 076017, 2012).

However, a major hindrance faced by conventional wide-field Raman techniques is the elevated autofluorescence background from endogenous fluorophores that drown out the desired chemical contrast (Yang et al., Analyst 139(12): 3107-3114, 2014) such that the signals obtained from Raman scattering are not clearly distinguishable from this background. One reason for this is that, while generally autofluorescence decreases at longer wavelengths because fewer biological chromophores are excited (Frangioni, Curr Opin Chem Biol 7(5): 626-34, 2003; Sun et al., J Biomed Opt 28(9): 094805, 2023) as the illumination wavelength increases, at the same time the intensity of Raman scattering also decreases, in particular the Raman cross-section is inversely proportional to the fourth power of illumination wavelength (Shipp et al., Advances in Optics and Photonics 9(2) : 315-428, 2017; Patil et al., Opt Lett 39(2): 303-306, 2014).

As consequence, even when going to wavelengths in the near-infrared range, reaching up to 785nm, such that the autofluorescence is reduced while keeping the Raman scattering shifts within the detection range of typical Si-based detectors (Papour et al., Biomed Opt Express 6(10): 3892-3897, 2015), the chemical contrast obtained with this approach has been unsatisfactory.

In view of this, there is a need for a technique that allows imaging, in particular imaging at the mesoscopic and macroscopic scale, rather than mere microscopy, without the need for labeling, remains to be developed.

### Summary

The present disclosure has been made in view of the above technical limitations of currently existing techniques and provides an imaging system and method for imaging that allow to image an object, preferably a mesoscopic or macroscopic object, for example, of biological and/or medical origin, such as tissue, without the need to label the object.

According to an aspect of the present disclosure, there is provided an imaging system for imaging an object, the imaging system comprising: an illumination light source configured to illuminate an area of the object; and a detector configured to detect an image based on Raman scattered light from the object, wherein light emitted by the illumination light source has a wavelength of at least 810nm.

According to another aspect of the present disclosure, there is provided a method for imaging an object, the method comprising the steps of: illuminating an area of the object using illumination light; and detecting an image based on Raman scattered light from the object, wherein the illumination light has a wavelength of at least 810nm.

In addition, preferred aspects of the present disclosure are defined in the dependent claims.

According to the invention, a technique that allows imaging, in particular imaging an object at the mesoscopic and macroscopic scale, for example, an object of biological and/or medical origin, such as tissue, without the need for labeling and/or staining, is provided.

### Brief description of the drawings

Embodiments of the present disclosure, which are presented for better understanding the inventive concepts, but which are not to be seen as limiting the disclosure, will be described with reference to the figures in which:
- Fig. 1: shows an illustration of an imaging system for imaging an object;
- Fig. 2: shows a flow chart of a method for imaging an object;
- Fig. 3: shows an illustration of an imaging system including a filter for imaging an object;
- Fig. 4: shows Raman spectra of water and olive oil;
- Fig. 5: shows images of a probe containing water and olive using different imaging methods and/or different detection ranges;
- Fig. 6: shows images obtained using Raman imaging at different illumination light wavelengths and corresponding CH channel intensity across a line through the object;
- Fig. 7: shows images obtained using Raman imaging at different illumination light wavelengths for different channels; and
- Fig. 8: shows a plot of the fat pads to liver ratio in the CH channel of Fig. 6 as a function of the illumination light wavelength.

### Detailed description

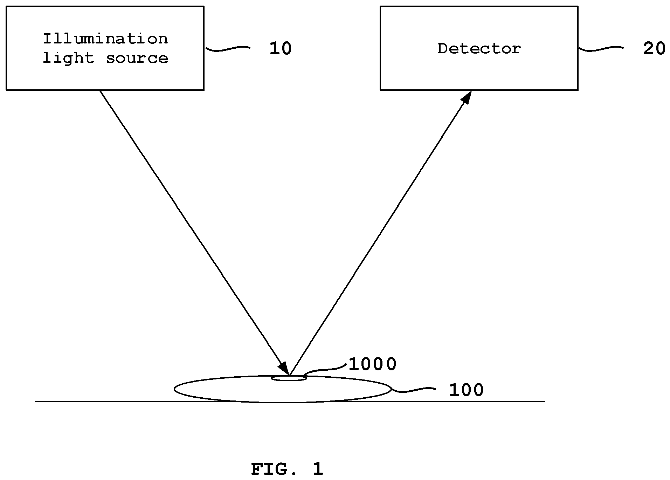

Fig. 1 shows an illustration of an imaging system for imaging an object. In this general embodiment, there is provided an imaging system for imaging an object 100, the imaging system comprising: an illumination light source 10 configured to illuminate an area 1000 of the object 100; and a detector 20 configured to detect an image based on Raman scattered light from the object 100, wherein light emitted by the illumination light source 10 has a wavelength of at least 810nm.

It is noted that in the present disclosure imaging is understood as distinct from microscopy and/or spectroscopy: While microscopy and spectroscopy, in the context of Raman scattering from the focus of a coherent laser beam, is limited to the microscopic scale, imaging refers to analyzing not merely such a microscopically small part of the object, but rather at least a mesoscopic or macroscopic part of the object is analyzed. In particular, imaging implies - different from microscopy/spectroscopy - that at least a mesoscopic or macroscopic part of the object is illuminated by a single illumination step and consequently analyzed by a single analysis step.

That is, imaging may mean simultaneous, spatially resolved detection on a linear or 2D array of pixels and/or detectors.

It is noted that the area 1000 of the object 100 may be the entire object 100. In other words, the present disclosure is not limited to imaging only a part of the object under study or to imaging the whole object. Instead, imaging can be adjusted to an arbitrary part of the object according to the respective application.

In this context, it is noted that a field of view of the imaging system, associated with the area 1000 of the object 100 illuminated by the illumination light source 10, may be at least 0.25cm², at least 2cm², preferably at least 5cm², preferably at least 10cm², more preferably at least 50cm², more preferably at least 100cm², more preferably at least 400cm².

This illustrates that the present disclosure is directed at Raman imaging at the mesoscopic or macroscopic scale rather than Raman microscopy limited to a microscopic focal spot which \may be scanned to obtain Raman spectra sequentially and to analyze a spectrum for each point scanned.

Herein, field of view may be considered as the area that is illuminated and detected by the imaging system concurrently, that is, at the same time. In other words, the field of view can be illuminated and detected in a single acquisition step. Different from that, in Raman microscopy, even when the entire object is scanned, only the light from the focal spot is analyzed.

In other words, different from spectroscopy, imaging may comprise multiplexing the detection with a spatial resolution and the detector has an array of pixels, preferably a square array of pixels. Such an array may for example have at least 16 x 16 pixels, preferably at least 160 x 128 pixels, more preferably at least 320 x 256 pixels, more preferably at least 640 x 512 pixels, or more preferably at least 1280 x 1024 pixels.

The illumination light source 10 may comprise a laser. Further, the illumination light source 10 may be configured to diffusely illuminate the area of the object. Here, diffusely illuminating the area 1000 and/or the object 100 may be understood as illuminating the area 1000/the object 100 without focusing on a particular part of the area/object. It may in particular mean that the area 1000/the object 100 is substantially uniformly illuminated. Diffuse illumination is different from focusing the coherent laser on a single focus point as done in conventional Raman spectroscopy.

Diffusely illuminating may be achieved by using a diffuser. A diffuser, i.e., a device that diffuses light, may be device that scrambles the wavefront of the light and reduces the spatial coherence of the light. In other words, the illumination light source 10 may comprise a diffuser through which the light, preferably laser light, passes before it illuminates the area of the object.

The illumination light source may comprise a laser source, for example a continuous wave laser source collimated by a lens. The laser light may then goes through a diffuser and may further be coupled with one or more clean-up filters suitable for each laser. In an example using 785nm laser, such a filter may be a SP800.

In a further example, the illumination light source may comprise an LED. This may require longer exposure times compared to a laser source but may simplify the setup.

Some of the experimental data discussed in this disclosure may be obtained with the following setup: Samples are illuminated using the following lasers (Lumics) to obtain the wavelengths indicated in the figure legends: 785 nm, LU0785D250-U70AN; 892 nm, LU0890D400-U10AF; 938 nm, LU0940D250-U70AF; 968 nm, LU0980D350-U30AF; and 1064 nm, LU1064D350-U70AF. Lasers are connected to a 7 x 1 fan-out fiber-optic bundle (catalog no. BF76LS01, Thorlabs) with a core diameter of 600 um. The laser light travels from the common end of the multi-fiber bundle into an excitation cube (catalog no. KCB1EC/M, Thorlabs), it reflects off a mirror (catalog no. BBE1-E03, Thorlabs), then it passes through a positive achromat (catalog no. AC254-050-B, Thorlabs). The wavelength of the laser output is cleaned up using appropriate short-pass filters to prevent detection of the laser light, such as a 900nm filter for illumination at 892 nm. From the achromat, the laser light passes through an engineered diffuser (catalog no. ED1-S20-MD, Thorlabs) to provide uniform illumination on the field of view.

Depending on the experiment, the maximum laser power density varies roughly between 50 and 150 mW/cm², as measured using a PM100D power meter equipped with a S130C sensor (Thorlabs). The densities remain within international exposure limits (International Commission on Non-Ionizing Radiation 2013).

As indicated, the light emitted by the illumination light source 10 has generally a wavelength of at least 810nm, i.e., 810nm or more.

In a preferred embodiment, the light emitted by the illumination light source has a wavelength in the range of 810nm to 1800nm.

In a further preferred embodiment, the light emitted by the illumination light source has a wavelength in the range of 810nm to 1300nm.

In a further preferred embodiment, the light emitted by the illumination light source has a wavelength in the range of 830nm to 1300nm.

In a further preferred embodiment, the light emitted by the illumination light source has a wavelength in the range of 830nm to 1200nm.

In a further preferred embodiment, the light emitted by the illumination light source has a wavelength in the range of 850nm to 1200nm.

In a further preferred embodiment, the light emitted by the illumination light source has a wavelength in the range of 890nm to 1070nm.

In a further preferred embodiment, the light emitted by the illumination light source has a wavelength in the range of 892nm to 1064nm.

Any of the disclosed lower limits for the wavelength of the light emitted by the illumination light source 10 can be combined with any of the disclosed upper limits for the wavelength of the light emitted by the illumination light source 10 to define further suitable ranges of the illumination wavelength for the purposes of this invention. As an example, further exemplary ranges for the wavelength of the light emitted by the illumination light source 10 illustrating this include the range of 810nm to 1064nm and the range of 892nm to 1800nm.

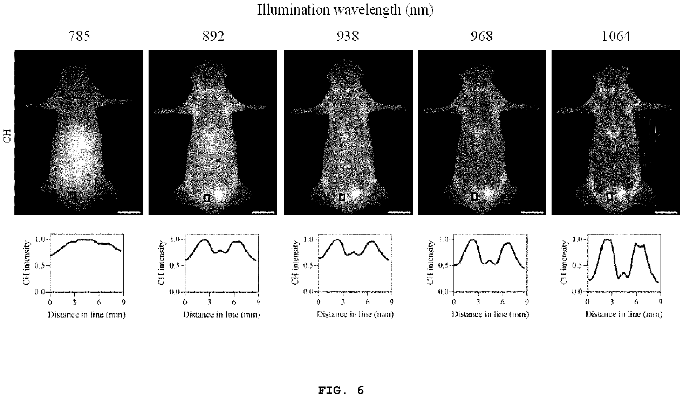

In conventional attempts to achieve Raman imaging, wavelength up to 785nm were used in line with the understanding that autofluorescence reduces with increased wavelength, the autofluorescence background nevertheless has proven to be a substantial obstacle. The inventors of the present disclosure, however, have reasoned and found that further increasing the wavelength, despite the associated decrease in Raman intensity due to the scaling of Raman scattering with the illumination wavelength, decreases the autofluorescence background further such that the overall ratio between Raman scattering-based signals and background signals improves significantly. Based on these observations, see also the discussion of Figs. 6-8, it has been found that a wavelength of 810nm of the illumination light is sufficient to achieve an acceptable contrast and thus to realize Raman imaging, i.e., visualization of an object on a mesoscopic or macroscopic scale based on Raman scattering.

In this context, it is noted that the shift to higher wavelengths, i.e., at least 810nm, has an impact on the detection of the Raman scattered signals and hence using particular detectors, as discussed also below, may be advantageous. Specifically, with shifting the illumination light wavelength, the range of detection wavelengths of the detector may have to increase as well.

The detector 20 may thus be configured to detect light with a wavelength of at least 950nm, i.e., 950nm or more.

In a preferred embodiment, the detector 20 may be configured to detect light with a wavelength in a range of 950nm to 2500nm, which may be referred to as "short-wave infrared (SWIR)" or "near-infrared II (NIR-II)".

In a further preferred embodiment, the detector 20 may be configured to detect light with a wavelength in a range of 950nm to 2200nm.

In a further preferred embodiment, the detector 20 may be configured to detect light with a wavelength in a range of 950nm to 2000nm.

In a further preferred embodiment, the detector 20 may be configured to detect light with a wavelength in a range of 950nm to 1700nm.

In a further preferred embodiment, the detector 20 may be configured to detect light with a wavelength in a range of 950nm to 1600nm.

Any of the disclosed ranges of illumination wavelength of the illumination light source 10 can be combined with any of the disclosed ranges in which the detector 20 may be configured to detect light. In fact, these combinations are not particularly limited as there is, apart from the Raman shifts one is interested and/or are present in the object to be analyzed, there are no limitation on any of these combinations.

In line with the above discussion, the detector 20 may be a wide-field imaging detector. This in particular advantageous in the context if a large field of view is desired.

Further, the detector 20 may be a InGaAs-based detector, a HgCdTe-based detector or a Ge-based detector. These detectors may be advantageous over conventionally used detectors, such as Si-based detectors, as they can reach higher detection ranges (ranges having longer wavelengths) necessary if longer illumination light wavelengths are used.

Moreover, the detector 20 may be cooled to a temperature in the range of -50°C to -272°C, preferably in the range of -50°C to -200°C, preferably in a range of -180°C to -200°C, more preferably to about -190°C.

A temperature close to -50°C can be reached by air cooling, while temperatures in the range of -180°C to -200°C may be reached using, for example, liquid nitrogen. A temperature down to -272°C may be reached using, for example, liquid helium.

The object 100 may be of biological and/or medical origin. For example, the object 100 may be a sample to be analyzed, for example for a medical purpose. This may include the object 100 being a mouse.

In addition, the object 100 may be chemicals, heterogeneous samples, or pharmaceutical compounds. This may find applications in, for example, manufacturing quality control procedures, in material sciences, food production.

The detection path may comprise the detector, one or more lenses, one or more filter, such as laser clean-up filters and/or effective band-pass filters that will determine which spectral region to be detected. It may further involve a filter wheel. Manual operation may be used instead of the filter wheel.

Illumination light may be blocked from reaching the detector 20. This may be more relevant if the signal is weak, small fractions of the illumination light passing through the filters may influence the detected signals. In such a case, the detected signals may be overwhelmed by reflection and measuring the Raman signals may be difficult.

Some of the experimental data discussed in this disclosure may be obtained with the following setup: The nitrogen-cooled camera NIRvana LN (Princeton Instruments) is mounted on a rail carriage (catalog no. G026428000, Qioptic) parallel to an optical table (catalog nos. SDR7590 and B7590L, Thorlabs). This camera may be advantageous because of its deep cooling, low dark current and low read noise, which may provide high signal-to-noise ratios at long exposures in a single frame. It is noted that a simpler, air-cooled portable NIRvana HS (Princeton Instruments) can also detect Raman scattering. An f/2.8, 50-mm lens capable of transmitting SWIR radiation (SWIRON 2.8/50, Schneider-Kreuznach) is attached to the camera using an F-mount adapter, while three 30-mm cage plates with removable holders (catalog no. CFH2/M, Thorlabs) for 1-inch optical filters (filter slots 1-3) are positioned in front of the camera lens to facilitate filter changes. A silver mirror in a right-angle kinematic elliptical holder (catalog nos. KCB1EC/M and PFE10-P01, Thorlabs) is mounted on the cage plate farthest from the lens in order to direct the laser light towards the optical table. A 60-mm cage plate with a removable holder for 2-inch optical filters (catalog no. LCFH2/M, Thorlabs) is attached to the side of the kinematic elliptical holder closer to the sample. Of the four filter positions, the one closest to the camera lens and the one closest to the sample (slots 1 and 4, respectively) is usually occupied by long-pass filters, which eliminated stray light from the laser; for example, the filters were long-pass 1000 nm when samples are illuminated at 968 nm. The two central filter positions are usually occupied by band-pass filters to define the detection band. With this set-up, fields of view at least 56 cm² can be obtained. It is further noted that a different choice of optics can enable larger or smaller fields of view, reflecting the scale-spanning character of wide-field imaging.

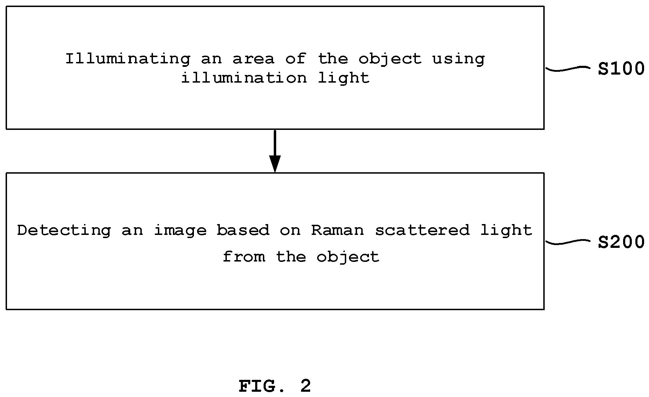

Fig. 2 shows a flow chart of a method for imaging an object. Specifically, Fig. 2 shows a method for imaging an object, the method comprising the steps of: illuminating an area of the object using illumination light (S100); and detecting an image based on Raman scattered light from the object (S200), wherein the illumination light has a wavelength of at least 810nm.

As can readily be understood, the method for imaging an object can be carried out using any imaging system discussed in the present disclosure, for example, the imaging system discussed in connection with Fig. 1.

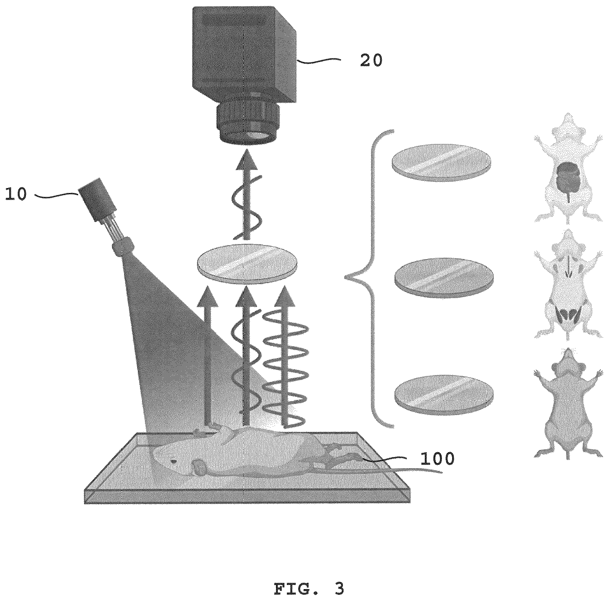

Fig. 3 shows an illustration of an imaging system including a filter for imaging an object. The imaging system of Fig. 3 may be understood as a particular example of the imaging system of Fig. 1 and accordingly contains an illumination light source 10, a detector 20 and an object 100, which is a mouse.

Here, the illumination light source comprises a laser diffusely illuminating the whole object 100. In line with the above discussion, the various bonds in the various molecules of the object 100 lead to Raman scattering at the different scattering wavenumbers, i.e., different scattered light with different wavelengths as illustrated by the three upgoing arrows going towards the detector 20. It is noted that the left and middle arrow represent Raman-scattered light with different wavelength as can be seen from the overlaid wave, while the right arrow represents the background signals.

Fig. 3 further shows a filter, preferably a band-pass filter and/or a combination of long- and short-pass filters resulting in an effective band-pass filter, which in the specifically depicted case, filters out any light different from the one represented by the middle arrow. Accordingly, the detector 20, in this case, only detects this band of the scattered light. As indicated on the right, several filters can be used, each leading to a separate image of the object 100 showing light in different wavelength ranges/channels. These may then be overlaid (merged) using different colors to arrive at one image merging the individual images each representing a single Raman band, leading to an image showing the complete Raman spectrum. Alternatively, the images can also be done at the single channel without overlaying such that a color composite can be obtained.

The filters may, for example, be used in parallel, i.e., the light incident towards the detector 20 may be split and each split part may be subject to a different filter, or may be used in series, the imaging is carried out several times, each time with a different filter. However, the details of the filters are not particularly limited and their arrangement may be varied as appropriate. It is further noted that the filters can also split incident light and multiple images can be generated simultaneously on multiple cameras/detectors.

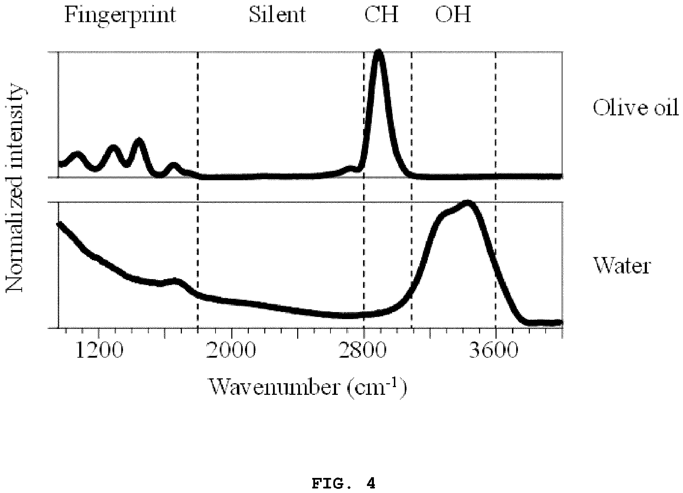

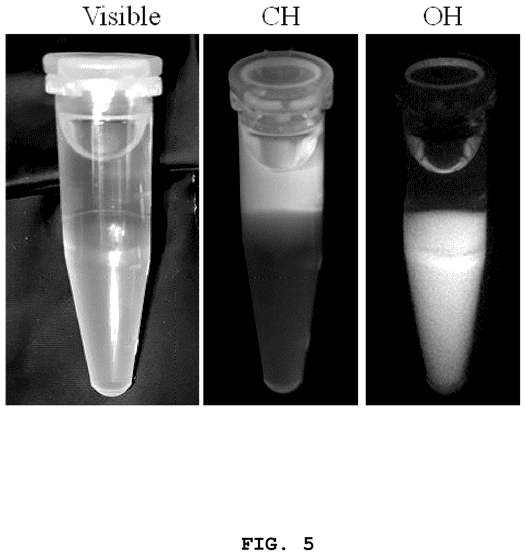

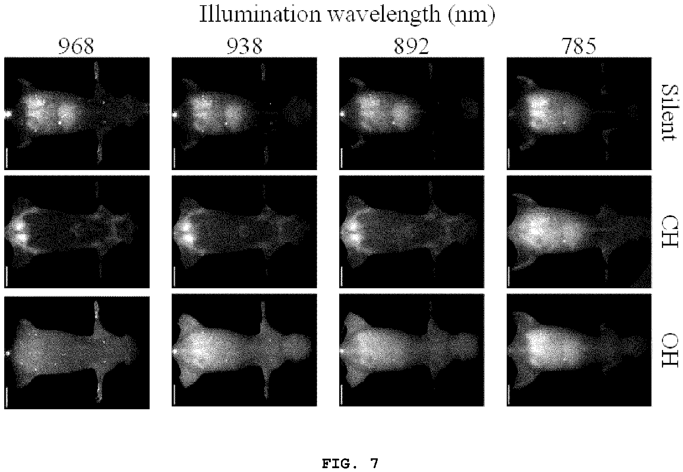

The band-pass filters may be chosen in accordance with the above discussion regions of a typical biomolecule such that a classification of different molecules becomes possible. For example, as discussed below with reference to Figs. 4 and 5, this may allow to distinguish between water and olive oil or as discussed below with reference to Figs. 6 and 7, this may allow to distinguish various parts of a mouse.

In other words, the imaging system may comprise a filter or a filter group, preferably at least two band-pass filters, more preferably at least three band-pass filters, each configured to select at least one Raman peak.

For these filters, a high optical density (OD) may be advantageous, in particular an OD of at least 4 may be preferred, to block the illumination light. Examples of these filter can be colored glass, dielectric, or a combination of both.

Here, Raman peak may be understood to refer to the Raman bands mentioned above, namely, the "fingerprint" region, the "Raman-silent" region, the "CH₂-CH₃" or "CH" region, or the "OH" region. Raman peak may further also refer to a more narrow part of such a band or may also be a combination of such bands or more narrow parts of such bands.

Figs. 4 and 5 discuss an example of using these Raman bands to demonstrate the capability of the present invention to use Raman scattering to visualize and differentiate between different biomolecules on a macroscopic scale. Fig. 4 shows Raman spectra of water and olive oil, while Fig. 5 shows images of a probe containing water and olive using different imaging methods and/or different detection ranges.

Fig. 4, showing the Raman spectrum of olive oil (top) and water (bottom) as normalized intensities as a function of the Raman shift in units of wavenumber (in cm⁻¹) and also indicating the four Raman bands, makes clear that by counting the detection events, i.e., intensity, when selecting, by means of a filter, the CH band and by counting the detection events when selecting the OH band, one can distinguish water from olive oil by means of Raman imaging. In fact, the clear peak in the CH band in the case of olive oil and the broader but equally clear peak in the OH band in the case of water make such a distinction straightforward.

Fig. 5 demonstrates that this distinction is indeed not only possible on the basis of the spectrum but that the present invention allows to implement this technique on a macroscopic scale. In detail, the left part, titled "Visible", of Fig. 5 shows a normal photo taken by a conventional camera sensitive to visible light of a tube filled with water (bottom) and olive oil (top). The middle part, titled "CH", shows the result of a Raman imaging process performed according to the present invention, wherein as titled the incident light detected by the detector is basically limited to the CH band. Similarly, the right part, titled "OH", shows the result of a Raman imaging process performed according to the present invention, wherein as titled the incident light detected by the detector is basically limited to the OH band. From the middle and right part of Fig. 5, it can clearly be recognized that the Raman imaging of the shown tube is able to provide a distinction between the water on the top and the olive oil on the bottom.

Fig. 5 thus illustrates that the present invention is not directed at Raman microscopy but is able to image macroscopic elements, i.e., that the field of view imaged clearly extends beyond the microscopic scale.

Figs. 6 and 7 show examples of Raman imaging according to the present invention performed on a mouse. Fig. 6 shows images obtained using Raman imaging at different illumination light wavelengths (top) and corresponding CH channel intensity across a line through these images (bottom).

The top part of Fig. 6 in particular shows how the autofluorescence dominant at an illumination wavelength of 785nm decreases compared to the Raman scattering signal at a wavelength of 892nm and above in the CH channel. In more detail, while in the most left image obtained with illumination light having a wavelength of 785nm, the lower part of the mouse is illuminated without showing any details in the image, the remaining four images obtained at higher wavelengths show a clear contrast indicating fat pads in the mouse in line with general mouse anatomy.

This is also confirmed in the bottom part of Fig. 6 showing the CH intensity across the line indicated in the top part of Fig. 6. While the most left image shows no particular contrast (no distinct spatially separable peaks), the four images on the right side show a common "W-shape" contrast that becomes more pronounced with increasing wavelength.

Fig. 7 shows images obtained using Raman imaging at different illumination light wavelengths for different channels. Specifically, Fig. 7 shows the "silent region", the "CH band" and the "OH band" as discussed above for the same mouse as shown in Fig. 6 illuminated at different wavelengths. Accordingly, the middle row of Fig. 7 corresponds, expect for the omission of the image for a wavelength of 1064nm, to the top part of Fig. 6.

The top row of Fig. 7 shows the silent region. As no (strong) Raman scattering takes place in the silent region, the four images obtained using illumination light at wavelengths of 785nm, 892nm, 938nm and 968nm are very similar: Without Raman scattering taking place, the change from 785nm to higher wavelength at which Raman should become more pronounced (if present) compared to the autofluorescence cannot be observed and accordingly the image does not change qualitatively.

The middle row of Fig. 7 showing the CH band has been discussed above and shows prominently how the Raman scattering becomes far more pronounced compared to the autofluorescence at higher wavelengths.

The bottom row of Fig. 7 showing the OH band shows a similar behavior as the CH band: While at 785nm the autofluorescence is very strong and thus mostly the lower part of the mouse is imaged, the Raman scattering of the CH band becomes more pronounced at higher wavelengths, leading to a better contrast of the complete mouse compared to the black background.

Taken together, Fig. 7 underscores that the capability of Raman scattering-based imaging at the macroscopic scale across the whole range of the Raman spectrum.

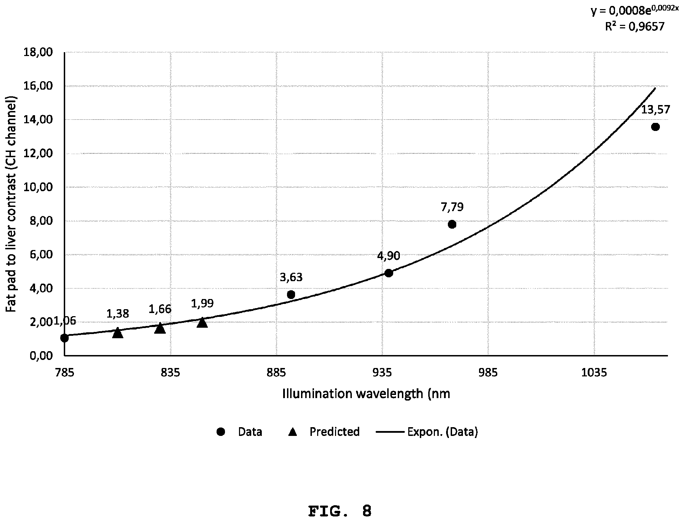

Fig. 8 shows a plot of the fat pads to liver ratio in the CH channel of Fig. 6. Specifically, Fig. 8 is based on the following considerations: The bottom part of Fig. 6, obtained by extracting the data from the dotted line in the middle of the mouse, shows that while at conventionally used wavelengths up to 785nm Raman scattering is subdued by autofluorescence, Raman scattering is dominant at the remaining wavelengths of 892nm and becomes more pronounced at 938nm, 968nm and 1064nm. This suggests that Raman scattering becomes dominant already at wavelength between 785nm and 892nm.

To obtain a better understanding at which wavelengths the advantageous effect of Raman scattering becomes dominant over autofluorescence, the data of the bottom part of Fig. 6, i.e., data obtained from the CH channel, has been analyzed in more detail. Specifically, a region of interest (ROI) in the bottom of the mouse was selected (the solid rectangle), its mean value was measured and divided by the mean value of an ROI in the liver of the mouse (the dotted rectangle). As the former lies within the fat pads of the mouse and the latter within the liver, this ratio is referred to as "fat pads to liver ratio".

One motivation behind this ratio is the following. The CH channel can be used to measure fatty tissue, represented by the fat pads, while liver tissue is autofluorescent and low in fat. Thus, a higher signal in the CH channel from liver tissue indicates a higher contribution from autofluorescence in the CH channel, while a higher signal in the CH channel from the fat pads indicates a higher contribution from Raman scattering. Thus, the higher the fat pads to liver ratio, the higher the chemical contrast. In other words, an increase in the fat pads to liver ratio indicates an increase in the Raman-to-Autofluorescence-contrast.

Further, for this purpose the images have been postprocessed to correct for illumination inhomogeneities.

Fig. 8 shows this fat pads to liver ratio as a function of the illumination wavelength. Solid circles indicate experimental data. The curve is an exponential fit of the experimental data, and the solid triangles are predicted values at wavelengths 810nm, 830nm and 850nm. From the values shown, it can be understood that already at an illumination light wavelength of 810nm it can be expected that Raman scattering is dominant over autofluorescence as the ratio is significantly larger than 1.

In summary, the present invention provides an imaging system and a method for imaging that allows to image an object, in particular a mesoscopic or macroscopic object, on the basis of Raman scattering by using illumination light with a wavelength of at least 810nm.

Advantageously, this allows imaging of macroscopic objects such that identification of molecules and/or biological tissue compositions becomes possible without the need to label and/or stain the object. The techniques discussed in the present disclosure may find application wherever label-free imaging techniques and/or techniques able to image mesoscopic/macroscopic objects are required or particular advantageous.

This technique may thus be preferable over conventional fluorescence techniques if labeling/staining the object to be analyzed should be avoided or if autofluorescence is too unspecific or not present.

With respect to Raman microscopy, the present invention allows faster analysis when a large field of view is required as well as a broader range of applications.

In conclusion, the present invention provides a technique for Raman imaging that allows label-free visualization of objects in mesoscopic and macroscopic fields of view, which can in particular find application in visualization in physiological and pathological processes. Thus, the present invention presents a straightforward optical technique different to conventional fluorescence imagining and expands the applications of biomedical imaging into the range of Short Wave Infrared light.

## Claims

1. An imaging system for imaging an object, the imaging system comprising:
an illumination light source configured to illuminate an area of the object; and
a detector configured to detect an image based on Raman scattered light from the object,
wherein light emitted by the illumination light source has a wavelength of at least 810nm.

2. The imaging system according to claim 1, wherein light emitted by the illumination light source has a wavelength in the range of 810nm to 1800nm, preferably in the range of 810nm to 1300nm, more preferably in the range of 830nm to 1300nm, more preferably in the range of 830nm to 1200nm, more preferably in the range of 850nm to 1200nm, more preferably in the range of 890nm to 1070nm, more preferably in the range of 892nm to 1064nm.

3. The imaging system according to claim 1 or 2, wherein a field of view of the imaging system, associated with the area of the object illuminated by the illumination light source, is at least 0.25cm², at least 2 cm², preferably at least 5cm², preferably at least 10cm², more preferably at least 50cm², more preferably at least 100cm², more preferably at least 400cm².

4. The imaging system according to any one of claims 1 to 3, wherein the illumination light source is configured to diffusely illuminate the area of the object.

5. The imaging system according to any one of claims 1 to 4, wherein the illumination light source comprises a diffuser through which the light passes before it illuminates the area of the object.

6. The imaging system according to any one of claims 1 to 5, wherein the detector is configured to detect light with a wavelength of at least 950nm.

7. The imaging system according to claim 6, wherein the detector is configured to detect light with a wavelength in a range of 950nm to 2500nm, preferably in a range of 950nm to 2200nm, more preferably in a range of 950nm to 2000nm, more preferably in a range of 950nm to 1700nm, more preferably in a range of 950nm to 1600nm.

8. The imaging system according to any one of claims 1 to 7, wherein the detector is a wide-field imaging detector.

9. The imaging system according to any one of claims 1 to 8, wherein the detector is an InGaAs-based detector, a HgCdTe-based detector or a Ge-based detector.

10. The imaging system according to any one of claims 1 to 9, wherein the detector is cooled to a temperature in the range of -50°C to -272°C, preferably in the range of -50°C to -200°C, preferably in a range of -180°C to - 200°C, more preferably to about -190°C.

11. The imaging system according to any one of claims 1 to 10, wherein the imaging system further comprises a filter or a filter group, preferably at least two band-pass filters, more preferably at least three band-pass filters, each configured to select at least one Raman peak.

12. A method for imaging an object, the method comprising the steps of
illuminating an area of the object using illumination light; and
detecting an image based on Raman scattered light from the object,
wherein the illumination light has a wavelength of at least 810nm.

13. The method according to claim 12, where the object is of biological and/or medical origin.

14. The method according to claim 12 or 13, where the method is carried out using the imaging system according to any one of claims 1 to 11.
